# EUROPÄISCHE PATENTANMELDUNG

(11) **EP 1 043 535 A1**
(43) Veröffentlichungstag der Anmeldung: **11.10.2000**
(21) Anmeldenummer: 99810275.0
(22) Anmeldetag: 31.03.1999
(51) Int. Cl.: F16L 13/14

(54) **Vorrichtung zum Verbinden von Rohrstücken**

(71) Anmelder: Haener Machinery Ltd, 4147 Aesch (CH)
(72) Erfinder: Haener, Gottfried, 4222 Zwingen (CH)
(74) Vertreter: Braun, André, jr.

(57) **Zusammenfassung**

Die Rohrverbindung besteht aus einer die beiden Enden der Rohrstücke umfassenden Muffe mit einem mittleren Bereich (5) mit einem dem Innendurchmesser der Rohrstücke (1, 2) entsprechenden Innendurchmesser und beiderseits des mittleren Bereichs anschliessenden Bereichen (6) zur Aufnahme der Rohrstücke. Ihre Innenwand ist mit mindestens einem nach innen gerichteten Bund (8) und ihre Aussenwand gegenüber dem Bund mit einem nach aussen gekrümmten Wulst (13) versehen. Zum Verpressen dieser Vorrichtung sind die anschliessenden Bereiche umgreifende, axial verschiebbare Pressringe (4) vorhanden.

## Beschreibung

Die Erfindung betrifft eine Vorrichtung zur Verbindung von Rohrstücken mit einer die beiden Enden der Rohrstücke umfassenden Muffe.

Zur Verbindung von Rohrstücken werden heute zunehmend Pressverbindungsvorrichtungen eingesetzt, bei denen die Rohrenden und die Verbindungsvorrichtungen durch Kaltverformung mittels Pressungen zu einer formschlüssigen Verbindung verpresst werden.

Eine solche Verbindungsvorrichtung ist beispielsweise in der EP 0 159 997 beschrieben. Diese Pressverbindungsvorrichtung besteht aus einer inneren Hülse, welche in die beiden Rohrenden eingesteckt wird, zwei äusseren Hülsen, welche auf die Rohrenden aufgeschoben werden, und zwei Pressringen. Ein Nachteil dieser Verbindungsvorrichtung besteht darin, dass sie aus fünf losen Teilen besteht und sowohl ihre Herstellung als auch ihre Montage somit kompliziert und teuer sind.

Angesichts dieser und weiterer Nachteile der bekannten Verbindungsvorrichtungen liegt der Erfindung die Aufgabe zugrunde, eine Vorrichtung zur Pressverbindung von Rohrstücken zu schaffen, welche einfacher aufgebaut und zu montieren ist und die eine dichte und sichere Rohrverbindung gewährleistet.

Diese Aufgabe wird mit Hilfe der kennzeichnenden Merkmale des Patentanspruchs 1 gelöst.

Im folgenden werden anhand der beiliegenden Zeichnungen bevorzugte Ausführungsbeispiele der Erfindung beschrieben. Es zeigen:
- Fig. 1: eine Schnittdarstellung einer Rohrbverbindungsvorrichtung und
- Fig. 2: eine Schnittdarstellung einer alternativen Form einer Rohrverbindungsvorrichtung.

Die in den Figuren im Schnitt gezeigten Rohrverbindungsvorrichtungen verbinden jeweils zwei Rohre 1, 2 gleichen Querschnitts koaxial miteinander. Auf der linken Seite der Figuren ist jeweils der unverpresste Zustand, auf der rechten Seite der verpresste Endzustand gezeigt.

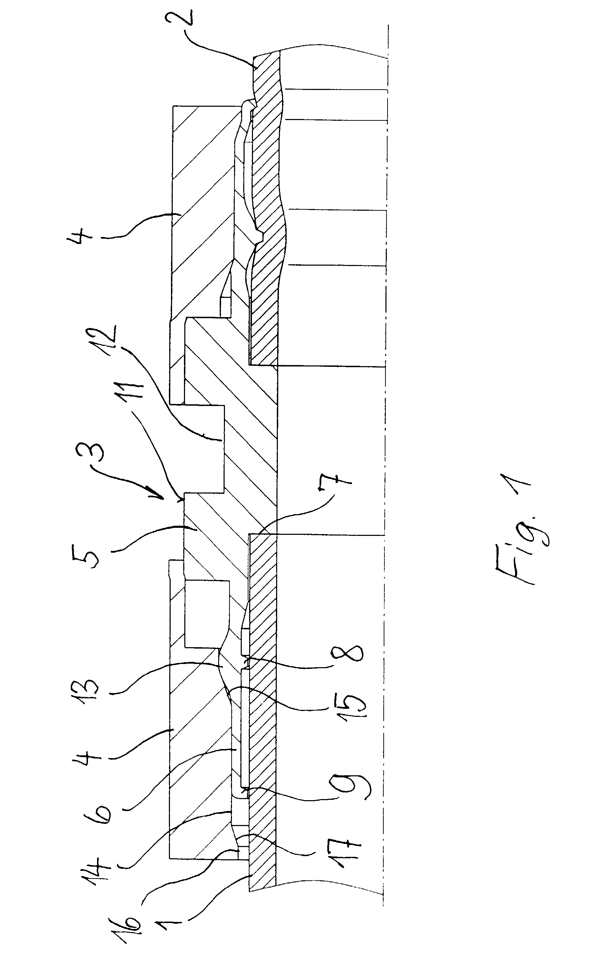

Die in Fig. 1 gezeigte Vorrichtung besteht aus einer Verbindungsmuffe 3, in welche die Rohrenden von beiden Seiten hineingesteckt werden, und aus zwei die Muffe aussen umgebenden Pressringen 4. Die beiden Pressringe sind gleich.

Die Muffe 3 hat eine im wesentlichen hohlzylindrische Form mit einem mittleren Bereich 5 und zwei beidseitig an den mittleren Bereich anschliessenden Bereichen 6. Der mittlere Bereich 5 der Muffe hat genau den gleichen Innendurchmesser wie die zu verbindenden Rohrstücke und ist im Abstand von der Mitte der Muffe zur Bildung eines Anschlags 7 für die Rohrenden auf den Aussendurchmesser der Rohrenden erweitert. Nach aussen zu erweitert sich der Innendurchmesser der anschliessenden Bereiche 6 noch weiter. Die Innenfläche der anschliessenden Bereiche besitzt einen nach innen gerichteten Bund 8 und eine Art nach innen gerichteter Flansch 9 an ihrem äusseren Ende. Der Bund 8 und der Flansch 9 haben ungefähr eine dem Aussendurchmesser der Rohrenden entsprechende Weite.

Die Aussenfläche 11 der Muffe 3 hat im mittleren Bereich einen relativ grossen Aussendurchmesser von ca. dem dreibis fünffachen der Rohrwandstärke und weist in ihrer Mitte eine umlaufende Nut 12 für den Ansatz eines Presswerkzeugs auf.

Bei den anschliessenden Bereichen 6 ist der Aussendurchmesser stark reduziert, so dass die Wandstücke der anschliessenden Bereiche kleiner bis gleich gross wie die Rohrwandstärke ist. An der dem Bund 8 gegenüberliegenden Stelle der Aussenfläche weist diese einen umlaufenden Wulst 13 auf. Dieser Wulst 13 hat einen gekrümmten Querschnitt.

Der Pressring 4 hat ebenfalls eine im wesentlichen hohlzylindrische Form mit einer zylindrischen Aussenwand und einer mehrfach abgestuften Innenwand. Zur Muffenmitte besitzt der Ring 4 einen Innendurchmesser, der geringfügig enger ist als der Aussendurchmesser des mittleren Bereichs 5 der Muffe 3. Dadurch wird der Ring beim Aufschieben auf den mittleren Bereich der Muffe aufgeweitet und gegen axiale Verschiebung zusätzlich gesichert. Der Pressring 4 ist im unverpressten Zustand bereits ein kurzes Stück auf den mittleren Bereich 5 der Muffe 3 aufgeschoben, so dass er durch die Aufweitung bereits in diesem Zustand mit der Muffe verbunden ist. Da in diesem Zustand keine weitere Verformung stattgefunden hat, sind die Rohrenden ohne weiteres einsteckbar. Durch die vorgängige Verbindung der Muffe mit den beiden Pressringen bilden diese eine Einheit im Gegensatz zu bekannten Lösungen mit einer Vielzahl unterschiedlicher Einzelteile.

Die Innenwand des Pressrings weist nach aussen hin zwei weitere Stufen mit reduzierten Durchmessern auf. Eine erste Stufe 14 hat einen Innendurchmesser gleich dem Aussendurchmesser der anschliessenden Bereiche 6 der Muffe 3. Am Übergang zu dieser Stufe ist ein konischer Bereich 15 vorgesehen.

Eine zweite Stufe 16 ist noch einmal im Durchmesser reduziert und weist ebenfalls einen konischen Übergang 17 auf.

Die Verbindung von Rohren verläuft so, dass von beiden Seiten je ein Rohrende bis zum Anschlag 7 in die Muffe 3 eingesteckt wird und dann mit einem speziellen Werkzeug die Verpressung erfolgt. Bei der Verpressung tritt weder eine Massveränderung noch eine Verspannung oder ein Verziehen auf. Dies hat den Vorteil, dass ein gesamtes Rohrleitungssystem zusammengesteckt werden kann, ohne dass zunächst verpresst wird. Es können also vor dem Verpressen noch allfällige Änderungen vorgenommen werden.

Ein weitere Vorteil besteht darin, dass durch die vorliegende Verbindungvorrichtung die zu verbindenden Rohre durch das Verpressen zentriert werden. Es ist daher nicht erforderlich, die Rohre vor dem Verbinden axial auszurichten.

Die Verpressung erfolgt dadurch, dass die beiden Pressringe 4 zur Muffenmitte hin geschoben werden und dabei zunächst den Wulst 13 mit dem Bund 8 und danach der Flansch 9 radial nach innen drücken. Dadurch, dass diese beiden Phasen der Verpressung getrennt nacheinander erfolgen, wird der höchste Pressdruck zum Verformen des Wulstes 13 und zum Eindrücken des Bundes 8 in das Rohrmaterial benötigt und nicht zum Überwinden von aufsummierten Presskräften von mehreren Stellen und Reibungskräften. Auch durch die verlaufende Krümmung des Wulstes 13 ergibt sich ein günstiges Pressdruckprofil.

Im verpressten Zustand, der auf der rechten Seite der Fig. 1 gezeigt ist, ist der Pressring 4 ganz auf die Muffe 3 aufgeschoben. Dabei wurde durch den konischen Bereich 15 der Wulst 13 und durch den konischen Übergang 17 der Flansch 9 nach innen gedrückt. Dadurch wurde der Flansch 9 und der Bund 8 in das Rohrende 2 unter Verformung desselben eingedrückt. Gleichzeitig wurde der gesamte innere Teil des Pressrings 4 auf den mittleren Bereich der Muffe aufgepresst und dabei aufgeweitet.

Durch die Verpressung und vor allem durch das dabei erfolgende Eindrücken des Bundes 8 in das Rohrmaterial ergibt sich eine stabile, unlösbare und vor allem absolut dichte Verbindung und zwar auch bei Rohren mit ungünstiger und nicht vorbehandelter Oberfläche. Ausserdem eignet sich die erfindungsgemässe Rohrverbindung nicht nur für nahtlose, sondern auch für geschweisste Rohre.

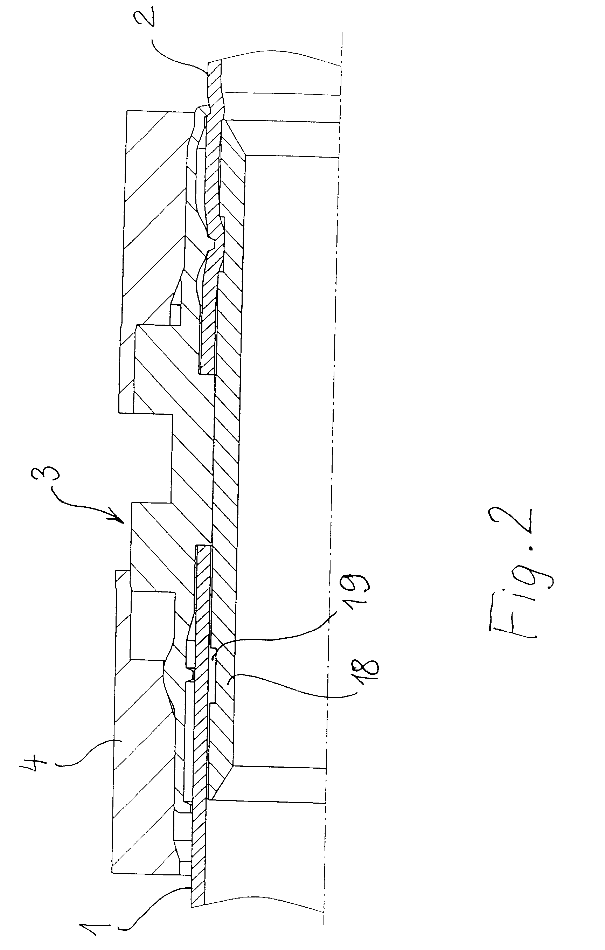

Bei der in Fig. 2 gezeigten Vorrichtung ist zusätzlich eine Stützhülse 18 vorhanden, die mit der Muffe im Bereich des mittleren Bereichs 5 verbunden sein kann. Die Version mit Stützhülse ist vor allem zur Verbindung dünnwandiger Rohre geeignet, die aufgrund ihrer geringen Wandstärke dem radialen Verpressdruck einfach ausweichen würden, so dass das Eindrücken des Bundes 8 in das Rohrmaterial nicht gewährleistet wäre. Die Stützhülse besitzt auf ihrer Aussenseite jeweils gegenüber dem Bund 8 eine umlaufende Nut 19, um die Verformung des Rohrendes durch den Bund 8 aufzunehmen, allerdings nur soweit, dass das Eindrücken des Bundes 8 in das Rohrmaterial noch stattfindet. Die Nutbreite ist zu diesem Zweck auf die Wandstärke der zu verbindenden Rohres abgestimmt. Demnach ist die Nut für Rohre mit geringerer Wandstärke schmäler als für Rohre mit dickeren Wänden.

Die Stützhülse 18 ist kürzer als die Muffe 3, so dass die Verformung des Rohrendes durch den Flansch 9 ausserhalb der Stützhülse erfolgt. Durch die Verformung des Rohres über die Kante der Stützhülse ergibt sich entlang dieser Umfangslinie eine Dichtwirkung.

Die bereits genannten Vorteile gelten für beide Ausführungsformen mit und ohne Stützhülse. Ein weiterer Vorteil des vorliegenden Systems besteht darin, dass der Weg, den die Pressringe bis zur vollständigen Verpressung zurücklegen müssen, extrem kurz ist. Dadurch ist die Baugrösse der ganzen Verbindungsvorrichtung gering. Ausserdem kann dadurch auch das Presswerkzeug entsprechend schmäler konstruiert werden.

Schliesslich ist es auch von Vorteil, dass an der vorliegenden Vorrichtung auf einen Blick von aussen sichtbar ist, ob die Verpressung stattgefunden hat oder nicht. Die Verpressung hat stattgefunden, wenn von der Muffe nur noch die Nut 12 sichtbar ist.

## Patentansprüche

1. Vorrichtung zur Verbindung von Rohrstücken mit einer die beiden Enden der Rohrstücke umfassenden Muffe, dadurch gekennzeichnet, dass die Muffe (3) einen mittleren Bereich (5) mit einem dem Innendurchmesser der Rohrstücke (1, 2) entsprechenden Innendurchmesser und beiderseits des mittleren Bereichs anschliessende Bereiche (6) zur Aufnahme der Rohrstücke aufweist, deren Innenwand mit mindestens einem nach innen gerichteten Bund (8) und deren Aussenwand gegenüber dem Bund mit einem nach aussen gekrümmten Wulst (13) versehen ist und dass die anschliessenden Bereiche umgreifende, axial verschiebbare Pressringe (4) vorhanden sind.

2. Verbindungsvorrichtung nach Anspruch 1, dadurch gekennzeichnet, dass an den äusseren Enden der anschliessenden Bereiche (6) weitere nach innen gerichtete Bünde (9) angeordnet sind.

3. Verbindungsvorrichtung nach einem der Ansprüche 1-2, gekennzeichnet durch eine zusätzliche Stützhülse (18).
